# EUROPÄISCHE PATENTANMELDUNG

(11) **EP 1 221 401 A2**
(43) Veröffentlichungstag der Anmeldung: **10.07.2002**
(21) Anmeldenummer: 01127511.2
(22) Anmeldetag: 17.11.2001
(51) Int. Cl.: B60S 1/32

(54) **Wischerarme sowie Verfahren zur Herstellung von Wischerarmen**

(30) Priorität: 03.01.2001 DE 10100020
(71) Anmelder: ROBERT BOSCH GMBH, 70442 Stuttgart (DE)
(72) Erfinder: Kessler, Peter, 77880 Sasbach (DE)

(57) **Zusammenfassung**

Verfahren zur Herstellung eines Wischerarms und ein Wischerarm, wobei ein Lappen (28) zur Drehwinkelbegrenzung am Gelenkteil (12a,b) ausgestanzt ist, der mit einer Aussparung (30) im Gelenkteil (12a,b) korreliert.

## Beschreibung

### Stand der Technik

Die Erfindung betrifft ein Verfahren zur Herstellung eines Wischerarms und einen Wischerarm nach Gattung der unabhängigen Ansprüche.

Es sind bereits zahlreiche Verfahren zur Herstellung von Wischerarmen sowie Wischerarme bekannt. Diese Verfahren beruhen in der Massenfertigung auf sogenannten Stanz-Biege-Verfahren, bei denen aus Blechplatten die Wischerarme ausgestanzt und anschließend gebogen werden. Normalerweise werden die Stanzteile dabei so angeordnet, dass möglichst wenig Abfall übrigbleibt, um die Materialkosten zu minimieren. Dazu weisen die Gelenkteile eine dreieckige Grundkontur auf, die durch wechselseitiges gegenüberliegendes Anordnen den Materialverbrauch minimiert.

### Vorteile der Erfindung

Das erfindungsgemäße Verfahren mit den Merkmalen des Hauptanspruchs hat den Vorteil, dass durch eine Aussparung im ausgestanzten Teil des Wischerarms, die mit einem über die Grundkontur des Teils abstehenden Lappen korrespondiert, ein vorbestimmter Mindestabstand zwischen zwei, beim Stanzen nebeneinanderliegenden Teilen nicht unterschritten wird. So können diese Teile in der Serienfertigung beim Stanzen enger aneinander plaziert werden, woduch ein Material eingespart und damit Kostenvorteil erzielt wird. Insbesondere bei den in Massenfertigung hergestellten Wischerarmen stellt dies eine erhebliche Verbesserung dar.

Durch die in den Unteransprüchen aufgeführten Maßnahmen ergeben sich vorteilhafte Weiterbildungen und Verbesserungen der im Hauptanspruch angegebenen Merkmale.

Ist die Aussparung gleich groß oder größer als der Lappen, so ist vorteilhafterweise auch bei größeren Fertigungstoleranzen eine geringe Ausschußquote möglich.

Wird die korrespondierende Aussparung genau so gewählt, dass ein minimaler Stanzabstand erreicht wird, so wird eine maximale Kostenreduktion erzielt.

Ein Wischerarm, der nach einem Verfahren nach einem der Ansprüche 1 bis 3 hergestellt ist, zwei Enden aufweist und im Bereich seines ersten Endes einen Lappen, beispielsweise zur Drehwinkelbegrenzung, aufweist und im Bereich seines zweiten Endes eine Aussparung aufweist, deren Flächeninhalt mindestens so groß wie der des ersten Lappens ist, hat den Vorteil, dass ein geringer Stanzabstand der Einzelteile erreicht wird. Dadurch ist der Wischerarm einfach und kostengünstig herzustellen.

Ist das Teil als ein im Wesentlichen U-förmiges Profilteil mit einer Basis und zwei Lateralschenkeln ausgebildet, wie dies bei den Gelenkteilen handelsüblicher Wischerarme der Fall ist, können diese kostengünstig hergestellt werden und verfügen trotzdem über eine Drehwinkelbegrenzung zur Begrenzung des Drehwinkels des Gelenkteils gegenüber einem Befestigungsteil mit dem der Wischerarm am Fahrzeug befestigt ist. Dazu weisen diese einen sich von der Basis abgewandten Kante eines Lateralschenkels aus erstreckenden Lappen auf.

Dabei ist es besonders vorteilhaft, wenn die Aussparung etwas breiter ist als der Lappen, da auf diese Weise Fertigungstoleranzen ausgeglichen werden können und die Ausschußquote dadurch gesenkt wird.

Besonders vorteilhaft ist es, wenn der erste Abstand zwischen der äußersten Kante des ersten Endes des Teils und dem Lappen etwa gleich groß ist, wie der zweite Abstand, der sich von der äußersten Kante des zweiten Endes des Teils bis zur Aussparung erstreckt. Auf diese Weise korrespondieren Lappen und Aussparung optimal, wodurch die Stanzabstände auf ein Minimum reduziert werden können.

Wird der Lappen an der, der Basis abgewandten Kante des Lateralschenkels nach innen gebogen, so dass er sich etwa parallel zur Basis des Profilteils erstreckt, so kann auf einfachste Weise eine Drehwinkelbegrenzung des Wischerarms bezüglich seiner Befestigung erreicht werden, die darüber hinaus optisch nicht störend wirkt.

### Zeichnungen

Ein Ausführungsbeispiel der Erfindung ist in den Zeichnungen dargestellt und in der nachfolgenden Beschreibung näher erläutert. Es zeigen:
Figur 1 ein Stanzblech mit Stempeln einer Stanzmaschine in einer Draufsicht und
Figur 2 das Gelenkteil eines Wischerarms nach einem Biegevorgang im Längsschnitt.

### Beschreibung des Ausführungsbeispiels

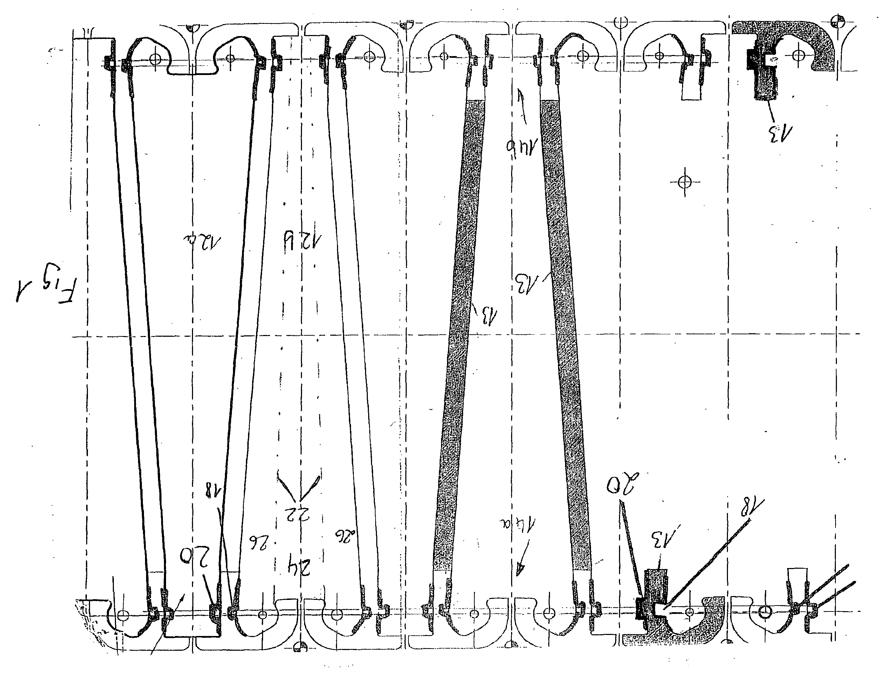

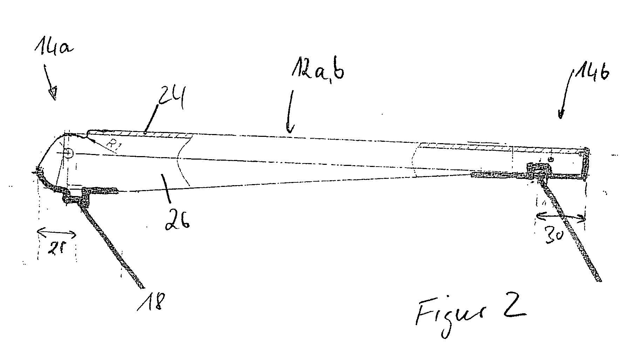

In Figur 1 ist eine Stanzblech 10 auf einer nicht dargestellten Stanzmaschine dargestellt. Die Teile 12a,b sind die Gelenkteile eines Wischerarms, dessen wesentliche Bestandteile in Figur 2 dargestellt sind. Die Teile 12.a,b werden von den Stempeln 13 aus der Blechplatte 10 ausgestanzt. Sie weisen ein erstes Ende 14a sowie ein zweites Ende 14b auf. Die Grundkontur der benachbarten Teile 12a,b entspricht jeweils der eines Dreiecks, wobei die breite Seite als erstes Ende 14a und die Spitze oder schmale Seite als zweites Ende 14b benannt ist.

Die Stempel 13 müssen, um sauber stanzen zu können, eine Mindestgröße aufweisen, d.h. es sind nicht beliebig feine Strukturen darstellbar. Im Bereich des ersten Endes 14a weisen die Teile 12b einen Lappen 18 auf, der aus der Grundkontur der Teile 12a,b herausragt. Deshalb weist das daneben angeordnete zweite Teil 12a an seinem zweiten Ende 14b eine Aussparung 20 auf, damit die Kanten der Teile 12a und 12b sauber ausgestanzt werden können, ohne den Abstand zwischen den zwei benachtbarten Teilen 12a, 12b größer zu gestalten, als dies ohne den Lappen 18 notwendig wäre.

Nach dem Stanzen werden die Teile 12a, b entlang der Biegelinie 22 gebogen, so dass ein U-förmiges Profilteil mit einer Basis 24 und den zwei Lateralschenkeln 26 entsteht.

Dies ist in Figur 2 dargestellt. Am ersten Ende 14a weist der Lateralschenkel 26 des Teils 12a,b den Lappen 18 auf. Von der äußersten Kante des ersten Endes 14a des Teils 12a,b hat dieser den gleichen ersten Abstand 28 wie die korrespondierende Aussparung 20 von der äußersten Kante des zweiten Endes 14b des Teils 12a,b. Dieser zweite Abstand 30 muß jedoch nicht genau gleich sein. Dies ist nur dann der Fall, wenn die äußerste Kante des ersten Endes 14a eines Teils 12a auf dem Stanzblech 10 mit der äußersten Kante des zweiten Endes 14b eines zum Teil 12a benachbarten Teils 12b fluchtet. Ist dies nicht der Fall, so verschiebt sich die Aussparung 20 natürlich entsprechend.

Da die heute gebräuchlichen Wischerarme am zweiten Ende 14b eine hakenförmige Biegung aufweisen müssen, können die Lateralschenkel 28 in diesem Bereich auch vollständig nach innen gebogen werden, sodaß diese parallel zur Basis 24 verlaufen. Wird das zweite Ende 14b dann zu einem Haken geformt, so ist die Aussparung 20 kaum mehr zu sehen.

Ebenso kann das Teil 12a,b auch durch eine Wischstange verlängert werden, die an dem, dem Teil abgewandten Ende einen Haken aufweist. Das zweite Ende 14b des Teils 12a,b umgreift dann die Wischstange wodurch die Aussparung 20 dann in diesem Bereich zu sehen ist, wenn der am Fahrzeug montierte Wischerarm von der Scheibe abgehoben wird.

## Patentansprüche

1. Verfahren zur Herstellung von Wischerarmen, insbesondere für ein Kraftfahrzeug, die mindestens ein Teil (12a) aufweisen welches in Stanz -Biege-Technik hergestellt wird und beim Stanzen mindestens zwei wechselseitig gegenüberliegende Teile (12a,b) ausgestanzt werden und mindestens an einer Seite des ersten Teils (12a) ein über die Grundkontur des Teils (12a) abstehender Lappen (18) ausgestanzt wird und am benachbarten zweiten Teil (12b) eine korrespondierende Aussparung (20) ausgestanzt wird, wobei ein vorbestimmter Mindestabstand zwischen den Teilen nicht unterschritten wird.

2. Verfahren nach Anspruch 1, **dadurch gekennzeichnet, daß** die Aussparung (20) mindestens den gleichen, vorzugsweise einen größeren Flächeninhalt aufweist als der Lappen (18).

3. Verfahren nach einem der vorhergehenden Ansprüche, **dadurch gekennzeichnet, daß** die korrespondierende Aussparung (20) genau so gewählt wird, daß nur der minimal benötigte Stanzabstand als Aussparung (30) ausgestanzt wird.

4. Wischerarm, insbesondere hergestellt nach einem Verfahren nach einem der Ansprüche 1 bis 3, der mindestens ein Teil (12a,b) mit zwei Enden (14a,b) aufweist, **dadurch gekennzeichnet, daß** das Teil (12a,b) im Bereich seines ersten Endes (14a) einen Lappen (18) aufweist und im Bereich seines zweiten Endes (14b) eine Aussparung (20) aufweist, deren Flächeninhalt mindestens so groß wie der des Lappens (18) ist.

5. Wischerarm nach Anspruch 4, **dadurch gekennzeichnet, daß** das Teil (12a,b) als ein im wesentlichen U-förmiges Profilteil mit einer Basis (24) und zwei Lateralschenkeln (26) ausgebildet ist und der Lappen (18) sich von einer, der Basis (24) abgewandten Kante eines Lateralschenkels (26) aus erstreckt.

6. Wischerarm nach Anspruch 4 oder 5, **dadurch gekennzeichnet, daß**, die Aussparung (20) breiter ist als der Lappen (18).

7. Wischerarm nach einem der Ansprüche 4 bis 6, **dadurch gekennzeichnet, daß,** der erste Abstand (28) zwischen der äußersten Kante des ersten Endes (14a) des Teils (12a,b) und dem Lappen (18) korresponiert zum zweiten Abstand (30) zwischen der äußersten Kante des zweiten Endes (14b) des Teils (12a,b) und der Aussparung (20), insbesondere daß der erste Abstand (28) gleich groß ist wie der zweite Abstand (30).

8. Wischerarm nach einem der Ansprüche 5 bis 7, **dadurch gekennzeichnet, daß** der Lappen (18) an der, der Basis (24) abgewandten Kante des Lateralschenkels (26) derart nach innen gebogen ist, daß er sich etwa parallel zur Basis (24) erstreckt.
